# EUROPÄISCHE PATENTSCHRIFT

(11) **EP 1 333 209 B1**
(45) Veröffentlichungstag und Bekanntmachung des Hinweises auf die Patenterteilung: **15.09.2004**
(21) Anmeldenummer: 02027748.9
(22) Anmeldetag: 11.12.2002
(51) Int. Cl.: F16L 3/10, B62D 25/16

(54) **Befestigungseinrichtung an einem kreiszylindrischen Rohr**
Mounting device of a cylindrical tube
Dispositif de fixation d'un tube cylindrique

(30) Priorität: 30.01.2002 DE 10203516
(43) Veröffentlichungstag der Anmeldung: 06.08.2003
(73) Patentinhaber: DaimlerChrysler AG, 70567 Stuttgart (DE)
(72) Erfinder: Bouza, Jose, 76744 Wörth (DE); Bruss, Werner, 71540 Murrhardt (DE); Scharlapan, Ernst, 73773 Aichwald (DE)

(56) Entgegenhaltungen:
- US-A- 2 735 693
- US-A- 4 377 294

## Beschreibung

Die Erfindung betrifft eine Befestigungseinrichtung an einem kreiszylindrischen Rohr mit einem ersten und einem zweiten lösbaren Befestigungselement.

US-A-2 735 693 offenbart eine Befestigungseinrichtung für einen aufwärts gerichteten kotflügel an einem Kreiszylindrischen Rohr, wobei auch ein abwärts gerichteter zweiter kotflügel dazu befestigt werden kann.

Eine solche Befestigungseinrichtung soll erfindungsgemäß derart gestaltet sein, daß unter Verwendung gleicher erster und zweiter Befestigungselemente entweder nur eines dieser beiden Befestigungselemente einzeln auf dem Rohr befestigt werden kann oder dass diese beiden Befestigungselemente platzsparend übereinander liegend gemeinsam auf dem Rohr befestigt werden können.

Eine Lösung dieses Problems zeigt die Befestigungseinrichtung mit sämtlichen Merkmalen des Patentanspruchs auf.

Eine solche Befestigungseinrichtung soll insbesondere verwendet werden an Tragrohren eines Nutzfahrzeuges, an denen unter anderem auch die Kotflügel des Fahrzeuges mit allerdings anderen Befestigungsmitteln befestigt werden.

Die erfindungsgemäßen Befestigungselemente können in einem solchen Anwendungsfall beispielsweise auch zur Aufnahme von Haltern für die Befestigung von Teilen einer Seitenverkleidung und Haltern zur Befestigung von Fahrzeugzubehör wie beispielsweise eines Unterlegkeiles dienen.

Ein vorteilhaftes Ausführungsbeispiel ist in der Zeichnung dargestellt.

In dieser zeigen in jeweils einer perspektivischen Darstellung
- Fig. 1: eine Befestigungseinrichtung an einem zylindrischen Rohr mit übereinander angeordnetem ersten und zweiten Befestigungselement,
- Fig. 2: das Rohr nach Fig. 1 mit lediglich einem darauf aufgelegten zweiten Befestigungselement.

An einem Rohr 1 sind übereinanderliegend befestigt über eine nicht dargestellte Schraube ein erstes und ein zweites Befestigungselement 2 bzw. 3. Das erste Befestigungselement 2 liegt zwischen dem zweiten Befestigungselement 3 und dem Rohr 1 direkt auf dem Rohr 1 auf. Für die Befestigung mit der nicht dargestellten Schraube besitzt das Rohr Durchgangsbohrungen 4, wie sie in der Zeichnung außerhalb der Befestigungselemente 2, 3 zu erkennen sind.

Das erste Befestigungselement 2 besitzt ein U-Profil mit einem ebenen, plattenförmigen geschlossenen Bereich 5 und zwei U-Schenkeln, nämlich einem offenen ersten Schenkel 6 und einem zweiten geschlossenen U-Schenkel 7. Die Schenkel 6 und 7 ragen von dem plattenförmig geschlossenen Bereich 5 in einem stumpfen Winkel derart ab, daß bei einer Anlage des plattenförmigen geschlossenen Bereiches 5 an dem Rohr 1 die beiden U-Schenkel 6, 7 tangential an dem Außenumfang des Rohres 1 anliegen.

In dem plattenförmigen geschlossenen Bereich 5 des ersten U-Schenkels befindet sich eine Durchgangsöffnung 8, die kreisförmig ausgebildet ist.

Auf dem ersten Befestigungselement 2 liegt ein zweites Befestigungselement 3 auf. Das zweite Befestigungselement 3 besitzt ebenfalls in seinem Anlagebereich gegenüber dem Rohr 1 ein U-förmiges Profil mit einem geschlossenen Bodenbereich 9 und von diesem abragenden U-Schenkeln, nämlich einem ersten U-Schenkel 10 und einem zweiten U-Schenkel 11. Der geschlossene Bodenbereich 9 ist innen eben für eine flächenschlüssige Anlage an dem plattenförmigen geschlossenen Bereich 5 des ersten Befestigungselementes 2 ausgebildet. Die beiden U-Schenkel 10, 11 des zweiten Befestigungselementes 3 sind in einem gleichen stumpfen Winkel gegenüber dem geschlossenen Bodenbereich 9 gewinkelt wie die betreffenden U-Schenkel des ersten Befestigungselementes 2. Lediglich bei dem zweiten U-Schenkel 11 des zweiten Befestigungselementes 3 liegt eine Abweichung von dem vorgenannten stumpfen Winkel in einem schmalen Übergangsbereich zwischen dem geschlossenen Boden 9 und dem angrenzenden zweiten U-Schenkel 11 vor. Diese Abweichung ist in dem gezeichneten Ausführungsbeispiel durch die Breite des ersten Befestigungselementes 2 in Umfangsrichtung des Rohres 1 bedingt und kann bei verringerter Breite des betreffenden Bereichs 5 des ersten Befestigungselementes 2 auch entfallen.

Während der zweite U-Schenkel 7 des ersten Befestigungselementes 2 in Achsrichtung des Rohres 1 als geschlossene ebene Platte ausgebildet ist, ist der erste U-Schenkel 6 des ersten Befestigungselementes 2 zwischen seinen in Achsrichtung des Rohres 1 liegendem Bereich offen ausgebildet, das heißt dort befindet sich kein Material des zweiten U-Schenkels 7. Durch diese Ausbildung des ersten Befestigungselementes 2 ist es möglich, für sich genommen jeweils gleiche erste und zweite Befestigungselemente 2 bzw. 3 entweder aufeinander liegend mit dem ersten Befestigungselement 2 unten und dem zweiten Befestigungselement 3 oben auf dem Rohr zu befestigen oder diese Befestigungselemente 2, 3 jeweils einzeln in gleicher Weise mit dem Rohr 1 zu verbinden.

In dem geschlossenem Bodenbereich 9 des zweiten Befestigungselementes 3 befindet sich eine Durchgangsöffnung 12, die in Umfangsrichtung des Rohres 1 als Langloch ausgebildet ist. Die Durchgangsöffnungen 8 und 12 sind derart angeordnet, daß bei Aufeinanderlage der zwei Befestigungselemente 2, 3 eine Befestigungsschraube durch diese beiden Durchgangsöffnungen 8, 12 in das Rohr 1 eingreifen kann. Eine Ausbildung der Durchgangsöffnung 12 des zweiten Befestigungselementes 3 ist erforderlich, da das zweite Befestigungselement 3 bei Auflage auf dem ersten Befestigungselement 2 gegenüber der Achse des Rohres 1 um die Wanddicke des zweiten U-Schenkels 7 des ersten Befestigungselementes 2 parallel verschoben ist.

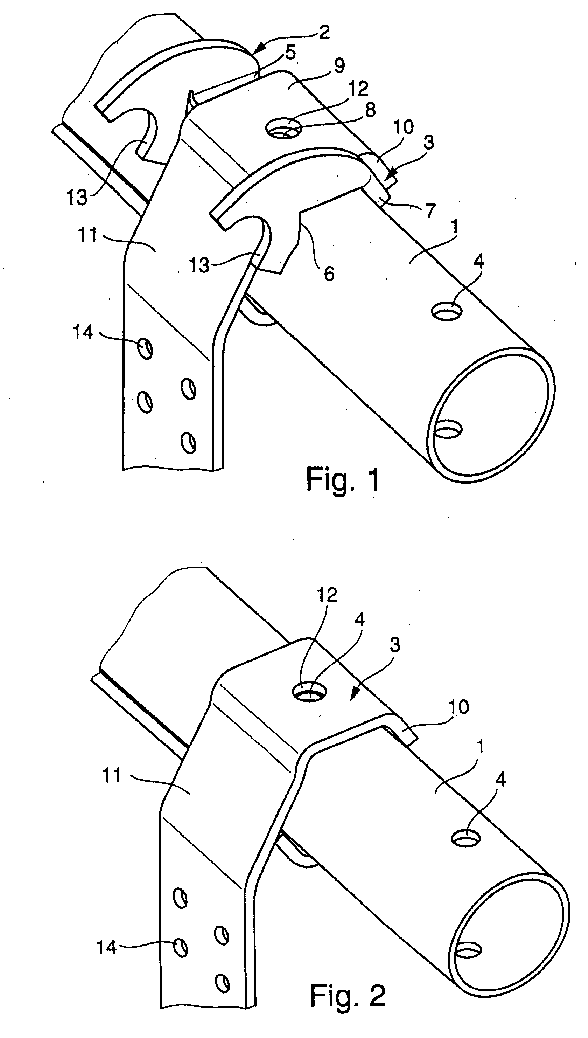

Eine Befestigung des zweiten Befestigungselementes 3 als einzelnes Teil an dem Rohr 1 ist in Fig. 2 dargestellt, wobei die Befestigungsschraube wiederum nicht gezeichnet ist.

In dem gezeichneten Ausführungsbeispiel ist das ersten Befestigungselement 2 derart ausgebildet, daß an diesem in den halbkreisförmigen Öffnungen 13 ein Rohr Aufnahme finden kann, wobei das Rohr durch Kleben, Schweißen oder Löten oder in einer anderen ähnlichen Weise mit dem ersten Befestigungselement 2 fest verbunden sein kann.

Das zweite Befestigungselement 3 ist an seinem von dem Rohr abragenden langen freien Ende mit Bohrungen 14 zur Befestigung beispielsweise eines Halters zur Befestigung eines Unterlegkeiles versehen.

## Patentansprüche

1. Befestigungseinrichtung an einem kreiszylindrischen Rohr (1) mit einem ersten und einem zweiten, lösbaren Befestigungselement (2) bzw. (3), von denen das erste Befestigungselement (2) zwischen dem zweiten Befestigungselement (3) und dem Rohr (1) liegen kann und beide Befestigungselemente folgende Merkmale aufweisen, nämlich bei dem ersten Befestigungselement (2)
- das erste Befestigungselement (2) besitzt einen U-förmig ausgebildeten Bereich zur Auflage auf dem Außenumfangsbereich des Rohres (1),
- der geschlossene, zwischen den U-Schenkeln (6, 7) liegende Bereich (5) ist in der Form im wesentlichen einer ebenen Platte ausgebildet,
- die U-Schenkel (6, 7) ragen von dem plattenförmigen, geschlossenen Bereich (5) über jeweils einen gleichen stumpfen Winkel ab, wobei die Größe des stumpfen Winkels für eine tangentiale Anlage der U-Schenkel (6, 7) an dem Außenumfang des Rohres (1) ausgelegt ist,
- die beiden U-Schenkel (6, 7) sind unterschiedlich ausgebildet, indem ein erster dieser U-Schenkel (6) in dem gesamten Bereich zwischen seinen in Achsrichtung des Rohres (1) ausgerichteten Enden offen ausgebildet ist, während der zweite U-Schenkel (7) in diesem Bereich zumindest teilweise geschlossen ist und in diesem geschlossenen Bereich im wesentlichen parallel zueinander verlaufende, ebene Innenund Außenwandflächen besitzt,
- in dem geschlossenen, plattenförmigen Bereich (5) des ersten Befestigungselementes (2) befindet sich eine Durchgangsöffnung (8) für die Aufnahme einer an dem Rohr (1) arretierbaren Schraube,
und bei dem zweiten Befestigungselement (3)
- das zweite Befestigungselement (3) besitzt ebenfalls einen U-förmig ausgebildeten Bereich zur Auflage direkt oder indirekt über das erste Befestigungselement (2) auf einem Außenumfangsbereich des Rohres (1),
- der geschlossene, zwischen den U-Schenkeln (10, 11) des zweiten Befestigungselementes (3) liegende Bereich (9) verläuft innen zwischen den U-Schenkeln (10, 11) im wesentlichen eben,
- die U-Schenkel (10, 11) besitzen Bereiche, die gegenüber dem geschlossenen Bereich unter jeweils einem untereinander und mit Bezug auf die U-Schenkel (6, 7) des ersten Befestigungselementes (2) gleichen stumpfen Winkel verlaufen,
- in dem geschlossenen Bereich (9) mit der im wesentlichen eben verlaufenden Innenwand ist eine Durchgangsöffnung (12) für die Aufnahme einer an dem Rohr (1) arretierbaren Schraube vorgesehen,
- die Durchgangsöffnung (12) besitzt in Umfangsrichtung des Rohres (1) eine Länge, durch die einerseits bei Aufeinanderliegen von erstem und zweitem Befestigungselement (2, 3) der Durchgang einer Schraube zur Befestigung an dem Rohr (1) durch die Durchgangsöffnungen (8, 12) beider Befestigungselemente (2, 3) möglich ist und durch die andererseits auch eine Schrauben-Befestigung an dem Rohr (1) bei direkter Auflage des zweiten Befestigungselementes (3) als einzigem Befestigungselement auf dem Rohr (1) möglich ist.

## Claims

1. A fastening device on a circular cylindrical pipe (1) having a first and a second detachable fastening element (2 / 3), the first fastening element (2) possibly being positioned between the second fastening element (3) and the pipe (1) and both fastening elements having the following features, namely in the case of the first fastening element (2):
- the first fastening element (2) has a U-shaped area to be placed on the outer peripheral area of the pipe (1),
- the closed area (5) which lies between the legs of the U-shape (6, 7) is designed essentially in the shape of a flat plate,
- the legs of the U-shape (6, 7) project from the plate-shaped closed area (5) at the same obtuse angle, the size of the obtuse angle being designed to ensure that the legs of the U-shape (6, 7) rest tangentially on the outer periphery of the pipe (1),
- the two legs of the U-shape (6, 7) are of different design in that a first of these U-legs (6) is open in the entire area between its ends which are aligned axially along the pipe (1), while the second U-leg (7) is at least partially closed in this area and has flat inner and outer wall surfaces which run essentially parallel to one another in this closed area,
- located in the closed plate-shaped area (5) of the first fastening element (3) is a through opening (8) to receive a screw which is able to lock on the pipe (1),
and, in the case of the second fastening element (3):
- the second fastening element (3) also has a U-shaped area which lies either directly or indirectly on top of the first fastening element (2) on an outer peripheral area of the pipe (1),
- the closed area (9) of the second fastening element (3) which lies between the legs of the U-shape (10, 11) runs essentially flat internally between the legs of the U-shape (10, 11),
- the legs of the U-shape (10, 11) have areas which run at an identical obtuse angle to both each other and to the U-legs (6, 7) in relation to the closed area,
- provided in the closed area (9) with the essentially flat running inner wall is a through opening (12) to receive a screw which is able to lock on the pipe (1),
- the length of the through opening (12) around the periphery of the pipe (1) means, on one hand, that when the first and second fastening elements (2, 3) lie one on top of the other it is possible to pass a screw through the through openings (8, 12) of both fastening elements (2, 3) in order to fix it to the pipe (1) and, on the other, that it is also possible to fix it to the pipe (1) by means of a screw when the second fastening element (3) is placed directly on the pipe (1) as the only fastening element.

## Revendications

1. Dispositif de fixation sur un tube cylindrique (1) comprenant un premier et un second éléments de fixation (2) et/ou (3) détachables, parmi lesquels le premier élément de fixation (2) peut être situé entre le second élément de fixation (3) et le tuyau (1) et les deux éléments de fixation présentent les caractéristiques suivantes, à savoir dans le cas du premier élément de fixation (2)
- le premier élément de fixation (2) possède une zone conçue en forme de U en vue de l'appui sur la zone périphérique extérieure du tuyau (1),
- la zone (5) fermée, située entre les branches du U (6, 7) est conçue sous la forme sensiblement d'une plaque plane,
- les branches du U (6, 7) font saillie de la zone (5) fermée, en forme de plaque, au-dessus de respectivement un même angle obtus, la dimension de l'angle obtus étant étudiée pour un support tangentiel des branches du U (6, 7),
- les deux branches du U (6, 7) sont conçues différemment, en ce qu'une première de ces branches du U (6) est ouverte dans la zone totale entre ses extrémités orientées dans la direction axiale du tuyau (1), tandis que la seconde branche du U (7) est fermée au moins en partie dans cette zone et possède dans cette zone fermée des surfaces de paroi intérieures et extérieures planes, s'étendant sensiblement parallèlement les unes aux autres,
- dans la zone (5) fermée, en forme de plaque du premier élément de fixation (2) se situe un orifice de passage (8) pour le logement d'une vis pouvant être bloquée sur le tuyau (1),
et dans le cas du second élément de fixation (3),
- le second élément de fixation (3) possède également une zone conçue en forme de U en vue du support direct ou indirect au-dessus du premier élément de fixation (2) sur une zone périphérique extérieure du tuyau (1),
- la zone (9) fermée, située entre les branches du U (10, 11) du second élément de fixation (3) s'étend vers l'intérieur entre les branches du U (10, 11) de manière sensiblement plane,
- les branches du U (10, 11) possèdent des zones qui s'étendent par rapport à la zone fermée selon respectivement un même angle obtus mutuellement et par rapport aux branches du U (6, 7) du premier élément de fixation (2),
- dans la zone (9) fermée avec la paroi intérieure s'étendant sensiblement de manière plane est prévu un orifice de passage (12) pour le logement d'une vis pouvant être bloquée sur le tuyau (1),
- l'orifice de passage (12) possède dans la direction périphérique du tuyau (1) une longueur, par laquelle d'une part lorsque le premier et le second élément de fixation (2, 3) sont situés l'un sur l'autre, le passage d'une vis en vue de la fixation sur le tuyau (1) à travers les orifices de passage (8, 12) des deux éléments de fixation (2, 3) est possible, et par laquelle d'autre part, une fixation de vis sur le tuyau (1), à l'occasion de l'appui direct du second élément de fixation (3) comme élément de fixation unique sur le tuyau (1), est également possible.
